# EUROPÄISCHE PATENTSCHRIFT

(11) **EP 3 291 987 B1**
(45) Veröffentlichungstag und Bekanntmachung des Hinweises auf die Patenterteilung: **29.08.2018**
(21) Anmeldenummer: 16721144.0
(22) Anmeldetag: 03.05.2016
(51) Int. Cl.: B32B 37/06, B32B 38/06, B32B 38/18, B32B 41/00, B21D 43/18, B60R 13/10

(54) **PRODUKTIONSANLAGE UND VERFAHREN ZUR HERSTELLUNG VON KFZ-KENNZEICHENROHLINGEN**
PRODUCTION SYSTEM AND METHOD FOR PRODUCING MOTOR VEHICLE NUMBER PLATE BLANKS
INSTALLATION DE PRODUCTION ET PROCÉDÉ DE FABRICATION D'ÉBAUCHES DE PLAQUES D'IMMATRICULATION DE VÉHICULES AUTOMOBILES

(30) Priorität: 05.05.2015 DE 102015106968
(43) Veröffentlichungstag der Anmeldung: 14.03.2018
(73) Patentinhaber: Erich Utsch AG, 57080 Siegen (DE)
(72) Erfinder: PFUNDSTEIN, Bernd, 35630 Ehringhausen (DE)
(74) Vertreter: Patentanwälte Bauer Vorberg Kayser
(86) Internationale Anmeldenummer: PCT/EP2016/059865
(87) Internationale Veröffentlichungsnummer: WO 2016/177713

(56) Entgegenhaltungen:
- EP-A2- 1 122 130
- US-A- 5 085 918
- Anonymous: "produkte - flexfeed", , 29. Januar 2013 (2013-01-29), XP055285843, Gefunden im Internet: URL:http://web.archive.org/web/20130129091 718/http://www.tecodrive.com/produkte - flexfeed.htm [gefunden am 2016-07-05]

## Beschreibung

Die Erfindung betrifft eine Produktionsanlage und ein Verfahren zur Herstellung mehrerer KFZ-Kennzeichenrohlinge, wobei die KFZ-Kennzeichenrohlinge aus einem kontinuierlich durch die Produktionsanlage geführten Metallband hergestellt werden.

Bei der Herstellung von Rohlingen (Platinen) für Kraftfahrzeug-Kennzeichen ist es bekannt, Produktionslinien einzusetzen, bei denen ein bandförmiges Grundmaterial in verschiedenen Stationen bearbeitet wird. Bei dem Grundmaterial handelt es sich typischerweise um ein Aluminiumblech, so dass ein Coil mit Aluminiumband einer vorgegebenen Breite von einer Abwickelhaspel abgewickelt wird. Die Bearbeitungsstationen, welche dieses Aluminiumband durchläuft, umfassen wenigstens einen Laminator, in dem eine Folie auf das Aluminiumband aufgebracht wird, und wenigstens eine Presse, in der aus dem beklebten Aluminiumband einzelne Kennzeichenrohlinge geprägt und abgetrennt werden. Bei der auf das Grundmaterial aufgebrachten Folie handelt es sich beispielsweise um eine retroreflektierende Folie, welche innerhalb eines Laminators auf das Aluminiumband auflaminiert wird. Dabei wird die Folie mittels Klebstoff auf das Aluminiumband aufgebracht.

Für die Bearbeitung wird das Aluminiumband zu den einzelnen Stationen und durch die Stationen hindurch bewegt, was üblicherweise mit geeigneten Förderantrieben erfolgt, welche das Aluminiumband durch eine Station hindurch schieben oder ziehen können. Ferner können zwischen den Stationen Ausgleichsbereiche vorgesehen sein, in denen das Aluminiumband durchhängt. Dies hat den Vorteil, dass die Arbeitsgeschwindigkeit der einzelnen Stationen nicht exakt aufeinander abgestimmt sein muss, da die Bereiche mit durchhängendem Aluminiumband als Pufferbereiche wirken. Durch den Laminator läuft das Aluminiumband beispielsweise kontinuierlich hindurch, während es der Presse getaktet zugeführt wird.

Ergänzend zu einem Laminator und einer Presse können innerhalb einer solchen Produktionsanlage ein oder mehrere Erwärmungseinrichtungen wie beispielsweise Öfen vorgesehen werden, um das Aluminiumband zu erwärmen bzw. eine Abkühlung zu verhindern. Eine Erwärmung durch einen Ofen kann insbesondere vor dem Laminator erfolgen, da dieser üblicherweise eine Mindesttemperatur des Aluminiumbands erfordert, um den Klebstoff der Folie beim Laminierprozess verarbeiten zu können. Übliche Verarbeitungstemperaturen für den Klebstoff lagen früher in der Größenordnung von 25-30°C, so dass das Aluminiumband vor dem Laminator durch einen Ofen auf eine entsprechende Temperatur erwärmt wurde. Mittlerweile liegen Verarbeitungstemperaturen für Klebstoffe eher bei etwa 20°C, so dass unter Umständen keine Erwärmung durch einen Ofen vor dem Laminator erforderlich ist. Dies setzt jedoch voraus, dass das Metallband ausreichend lange bei 20°C gelagert wurde, bevor es der Anlage zugeführt wird. Aber auch beim Pressvorgang sind üblicherweise Temperaturen von 25-30°C erforderlich, da es ansonsten durch den Umformprozess in der Presse zu Rissen in der Folie kommen kann.

An verschiedenen Stellen einer solchen Produktionslinie ist es jedoch nachteilig, wenn ein Antrieb zur Bewegung des Aluminiumbands Druck auf das Aluminiumband aufbringt, der zu einer Verformung des Bands und insbesondere zur Verformung einer aufgebrachten Folie führen kann. Auch Schmutzpartikel können dabei durch Druck in die Folie eingearbeitet werden. So können beispielsweise bei der Verwendung von Vorschubwalzen am getakteten Vorschub vor der Presse sogenannte Stoppstreifen auftreten. Derartige Stoppstreifen können auch bei einem Anlagenstopp entstehen, bei dem sich die Walzen eines Rollenvorschubs in die Folie abdrücken. Dies ist insbesondere dann der Fall, wenn eine retroreflektierende Folie verwendet wird und diese Glasbeads bzw. Glaskügelchen enthält. Bei einem Anlagenstopp muss der Vorschub das Aluminiumband in Position halten, wobei die Glaskügelchen in der Folie an dieser Stelle verschoben werden. Dies führt ebenfalls zu unerwünschten Stoppstreifen.

Ferner führt die Erwärmung des Aluminiumbands dazu, dass sich auch Bauteile eines Antriebs wie beispielsweise Vorschubwalzen erwärmen und dadurch ihr Vorschubverhalten verändern. Hierdurch wird der Vorschub ungenau, was ebenfalls insbesondere am getakteten Vorschub direkt vor der Presse nachteilig ist.

Eine Produktionsanlage gemäß dem Stand der Technik ist beispielsweise aus dem Patent US 5,085,918 bekannt. Aufgabe der Erfindung ist es daher, eine Produktionsanlage und ein Verfahren zur Herstellung von KFZ-Kennzeichenrohlingen bereitzustellen, welche die vorgenannten Nachteile vermeiden.

Erfindungsgemäß wird diese Aufgabe durch eine Produktionsanlage gemäß dem unabhängigen Anspruch 1 gelöst. Vorteilhafte Weiterbildungen der Produktionsanlage ergeben sich aus den Unteransprüchen 2-3. Ferner wird die Aufgabe durch ein Verfahren gemäß dem unabhängigen Anspruch 4 gelöst.

Es ist darauf hinzuweisen, dass die in den Ansprüchen einzeln aufgeführten Merkmale in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Die erfindungsgemäße Produktionsanlage dient zur Herstellung mehrerer KFZ-Kennzeichenrohlinge aus einem kontinuierlich durch die Produktionsanlage geführten Metallband. Dabei umfasst die Produktionsanlage wenigstens einen Laminator, wenigstens eine Pressvorrichtung und wenigstens einen Antrieb. Der Laminator ist zur Aufbringung einer Folie auf das Metallband ausgebildet, während die Pressvorrichtung zur Druckumformung des mit der Folie versehenen Metallbands und zur Teilung des mit der Folie versehenen Metallbands in einzelne KFZ-Kennzeichenrohlinge ausgebildet ist. Mit dem Laminator ist beispielsweise eine retroreflektierende Folie auf das Metallband aufbringbar, wie sie im Bereich der KFZ-Kennzeichen bekannt ist. Es kann sich jedoch auch um andere Arten von Folie handeln.

Die Pressvorrichtung dient hingegen zum Prägen des Metallbands, wobei typischerweise wenigstens ein erhabener, umlaufender Prägerand eingeformt wird. Jedoch können auch innerhalb der Fläche des Metallbands weitere bzw. andersartige Strukturen und Formen geprägt werden. Die Pressvorrichtung dient ferner dazu, aus dem bis dahin kontinuierlich durchlaufenden Metallband einzelne KFZ-Kennzeichenrohlinge abzutrennen. Diese werden auch als Platinen bezeichnet. Der Prägevorgang und der Abtrennvorgang können dabei gleichzeitig oder nacheinander erfolgen. Die so hergestellten Kennzeichenrohlinge können dann in separaten Prägeschritten mit einer Legende versehen werden.

Der wenigstens eine Antrieb ist dazu ausgebildet, das Metallband wenigstens abschnittsweise durch eine solche Produktionsanlage zu bewegen. Der Antrieb dient somit in wenigstens einem Abschnitt der Produktionsanlage zur Bewegung des Metallbands in diesem Abschnitt. In anderen Abschnitten können weitere Antriebe vorgesehen sein, die identisch oder anders ausgeführt sind. Erfindungsgemäß ist jedoch wenigstens ein Antrieb als ein kontaktloser Vorschub ausgebildet.

Mit dem kontaktlosen Vorschub lässt sich das Metallband berührungslos bewegen, was bedeutet, dass keine Antriebsmittel das Metallband kontaktieren, um es zu bewegen. Es sind somit keine Walzen oder Zangen vorhanden, sondern der Antrieb umfasst Mittel zur kontaktlosen Bewegung des Metallbands.

In einer Ausführungsform der Erfindung weist der kontaktlose Vorschub dazu wenigstens zwei gegenüber liegende Statoren auf, durch welche Strom führbar ist. Hierdurch lässt sich durch eine Steuerung zwischen den Statoren eine magnetische Wanderwelle aufbauen, mit welcher das Metallband kontaktlos zwischen den beiden Statoren in der Bewegungsrichtung der Wanderwelle bewegbar ist. Derartige Vorschübe sind bekannt und basieren auf magnetischer Anziehung bzw. Abstoßung, wobei zwischen den Statoren ein Führungsspalt ausgebildet wird, der so dimensioniert ist, dass das Metallband berührungslos hindurch geführt werden kann. Bei magnetischen Materialien wie Stahl heben sich die Anziehungskräfte der beiden Statoren auf, so dass ein Gegenstand berührungslos durch den Spalt zwischen den beiden Statoren bewegt werden kann. Transportierbar sind jedoch auch nichtmagnetische Materialien wie beispielsweise Aluminium und Kupfer. Bei diesen Werkstoffen führen die im Metallband angeregten Ströme zu einer Abstoßung des Metallbands von den Statoren, wodurch sie ebenfalls berührungslos durch den Spalt zwischen den beiden Statoren bewegt werden können.

Da KFZ-Kennzeichenrohlinge typischerweise aus einem Metallband aus Aluminium oder Stahl hergestellt werden, eignet sich ein solcher Vorschub für die Bewegung des Metallbands. Dabei können mit den bisher bekannten kontaktlosen Vorschüben Banddicken bis 3mm und Bandbreiten von 10 bis 500mm bewegt werden. Typische Banddicken für die Herstellung von KFZ-Kennzeichenrohlingen liegen bei etwa 0,7mm bis 1,5mm, während Bandbreiten beispielsweise zwischen 80mm und 305mm liegen können, so dass ein solcher Vorschub für die Verwendung in Produktionsanlagen für die Herstellung von KFZ-Kennzeichenrohlingen geeignet ist.

Der Einsatz eines kontaktlosen Vorschubs bringt den Vorteil mit sich, dass ein Metallband beim Transport nicht dem Kontakt mit Antriebskomponenten wie Walzen und/oder Zangen ausgesetzt ist. Daher wird der kontaktlose Vorschub besonders vorteilhaft dort eingesetzt, so das Metallband empfindlich ist und Beschädigungen bzw. Verschmutzungen besonders nachteilig sind. Dies trifft insbesondere auf den Abschnitt hinter dem Laminator zu, da durch den Laminator eine Folie auf das Metallband aufgebracht wird, die bis zur Zuführung zur Pressvorrichtung nicht beeinträchtigt werden sollte. Stoppstreifen lassen sich so vollständig vermeiden. Somit eignet sich die Erfindung insbesondere zur Bewegung von Metallbändern, die mit einer retroreflektierenden Folie versehen sind, da die Lage von darin enthaltenen Glaskügelchen durch den Vorschub nicht beeinträchtigt wird. Dies ist insbesondere auch bei einem Anlagenstopp von Vorteil.

Ein kontaktloser Vorschub kann daher beispielsweise dazu eingesetzt werden, das mit Folie laminierte Metallband aus dem Laminator heraus zu bewegen, damit es nach dem Laminierprozess nicht beeinträchtigt wird. Auch weitere Antriebe hinter dem Laminator können kontaktlos ausgeführt sei. Erfindungsgemäß ist wenigstens ein kontaktloser Antrieb direkt vor der Pressvorrichtung angeordnet. So kann er dazu eingesetzt werden, das Metallband getaktet der Pressvorrichtung zuzuführen. Neben dem zuvor genannten Vorteil der berührungslosen Bewegung hat der Vorschub an dieser Position ferner den Vorteil, dass er das Metallband mit höheren Geschwindigkeiten und größerer Genauigkeit bewegen kann als dies bei kontaktbasierten Antrieben der Fall ist. Beispielsweise sind Beschleunigungen in der Größenordnung bis 800 m/s möglich, wobei eine Genauigkeit von +/- 0,01mm erreicht werden kann. Hierdurch lässt sich die Hubzahl der Pressvorrichtung erhöhen und der Ausschuss an fehlgeprägten Kennzeichenrohlingen wird reduziert.

Ein kontaktloser Vorschub weist ferner einen geringen Energieverbrauch auf und ist verschleißarm. Der Energieverbrauch lässt sich gegenüber herkömmlich verwendeten Antrieben um etwa 90% reduzieren. Darüber hinaus kann der Vorschub nicht nur zur Bewegung des Metallbands, sondern gleichzeitig auch zur Erwärmung des Metallbands eingesetzt werden. Erfindungsgemäß ist daher vorgesehen, dass der kontaktlose Vorschub zur induktiven Erwärmung des Metallbands und der Bewegung des Metallbands ausgebildet ist. Auch diese Erwärmung kann vorteilhaft in verschiedenen Abschnitten der Produktionsanlage eingesetzt werden. Insbesondere kann dies auch vor dem Laminator erfolgen, um das Metallband auf eine Temperatur zu erwärmen, die für die Aufbringung der Folie im Laminator erforderlich ist. Ein kontaktloser Vorschub mit integrierter Erwärmung des Metallbands kann daher vorteilhaft dazu eingesetzt werden, um das Metallband dem Laminator zuzuführen.

Dabei kann die Erwärmung innerhalb des Vorschubs einstellbar sein. So können kontaktlose Antriebe an verschiedenen Positionen der Produktionsanlage unterschiedliche Erwärmungen bewirken. Ferner kann insbesondere die Bandtemperatur des einen Vorschub verlassenden Metallbands regelbar sein. Hierzu kann ein Sensor vorgesehen sein, welcher den Ist-Wert der Bandtemperatur beispielsweise am Ausgang des Vorschubs erfasst. Dieser Ist-Wert kann mit einem Sollwert verglichen und die Erwärmungsleistung des Vorschubs mit einem Regler entsprechend geregelt werden.

Erfindungsgemäß wird ein kontaktloser Vorschub mit integrierter Erwärmung direkt vor der Pressvorrichtung verwendet, um das Metallband dort auf eine Mindesttemperatur zu erwärmen, die erforderlich ist, damit die Folie beim anschließenden Prägeprozess nicht reißt. Da mittlerweile Folien mit Klebern eingesetzt werden, die bereits bei etwa 20°C mit dem Metallband verbunden werden können, ist vor dem Laminator oftmals keine zusätzliche Erwärmung des Metallbands erforderlich. Spätestens vor der Pressvorrichtung sollte eine solche Erwärmung jedoch erfolgen, um die zuvor genannten Nachteile zu vermeiden.

Daher stellt die erfindungsgemäße Verwendung eines kontaktlosen Vorschubs zur Zuführung des zuvor im Laminator mit Folie versehenen Metallbands in die Pressvorrichtung in Kombination mit der integrierten Erwärmung eine besonders vorteilhafte Variante dar, da der Vorschub direkt vor der Pressvorrichtung mehrere Vorteile verwirklichen kann. Die integrierte Erwärmung gewährleistet eine optimale Temperatur des Metallbands beim Pressvorgang, wobei die Erwärmung jedoch keine mechanischen Bauteile erwärmt, welche der Bewegung des Metallbands dienen. So verändert sich das Vorschubverhalten des Antriebs durch die Erwärmung nicht, was zur Genauigkeit des Antriebs beiträgt. Die Vorschubparameter bleiben gleich und insbesondere die Vorschublänge kann konstant gehalten werden.

Insgesamt können ein oder mehrere kontaktlose Antriebe innerhalb der Produktionsanlage eingesetzt werden, um das Metallband im betreffenden Abschnitt zu bewegen und gegebenenfalls auch induktiv zu erwärmen. Durch eine Erwärmung mittels Vorschub kann auf zusätzliche Komponenten wie Öfen verzichtet werden, was den Bauraum der Anlage reduziert und Kosten senkt. Besondere Vorteile hat ein kontaktloser Vorschub dabei erfindungsgemäß direkt vor der Pressvorrichtung. Selbst wenn an einer anderen Stelle der Produktionsanlage eine zusätzliche Erwärmung des Metallbands vorgesehen ist, kann das Band bis zum Erreichen der Pressvorrichtung wieder abgekühlt sein. Dies macht üblicherweise wärmeisolierende Abschirmungen erforderlich, welche das Metallband durchläuft, um nicht zu stark abzukühlen. Eine Erwärmung direkt vor der Pressvorrichtung macht derartige Abschirmungen entbehrlich, was die Anlage vereinfacht, Bauraum spart und Kosten senkt.

Darüber hinaus kann es beim Stillstand von bisherigen Anlagen dazu kommen, dass das Metallband soweit abkühlt, dass der Bandabschnitt zwischen einem Ofen und der Pressvorrichtung nach dem Wiederanfahren der Anlage ohne erneute Erwärmung nicht mehr für den Pressvorgang geeignet ist. Ein sehr langer Abschnitt des Metallbands kann daher nicht mehr verwendet werden und wird zu Ausschuss. Mit einem kontaktlosen Vorschub mit integrierter Erwärmung direkt vor der Pressvorrichtung lässt sich dieses Problem lösen, denn das während des Stillstands abgekühlte Metallband kann durch den Vorschub erneut ausreichend erwärmt werden. Hierdurch lässt sich die Ausschussquote der Produktionsanlage erheblich reduzieren.

Wird ein kontaktloser Vorschub für die Zuführung des Metallbands zur Pressvorrichtung verwendet, kann dieser Vorschub in einer Ausführungsform der Erfindung eine parametrisierbare Überlastfunktion aufweisen. Wenn das Metallband an ein Werkzeug innerhalb der Pressvorrichtung anschlägt, schaltet der Vorschub vorzugsweise ab. Ist die Pressvorrichtung somit nicht einsatzbereit, erfolgt keine weitere Bewegung des Metallbands, wodurch größere Schäden vermieden werden können. Zudem kann vorgesehen sein, dass das System aus Vorschub und Pressvorrichtung detektiert, bei welchem Pressenkurbelwinkel die Überlast auftrat. Dies erleichtert die Fehleranalyse.

Von der Erfindung umfasst ist auch ein entsprechendes Verfahren zur Herstellung mehrerer KFZ-Kennzeichenrohlinge innerhalb einer solchen Produktionsanlage, bei dem wenigstens ein Antrieb das Metallband kontaktlos bewegt. Der kontaktlose Vorschub ist direkt vor der Pressvorrichtung angeordnet und führt der Pressvorrichtung getaktet ein Metallband zu, welches zuvor in dem Laminator mit der Folie versehen wurde. Dabei ist vorgesehen, dass der kontaktlose Vorschub das Metallband induktiv erwärmt.

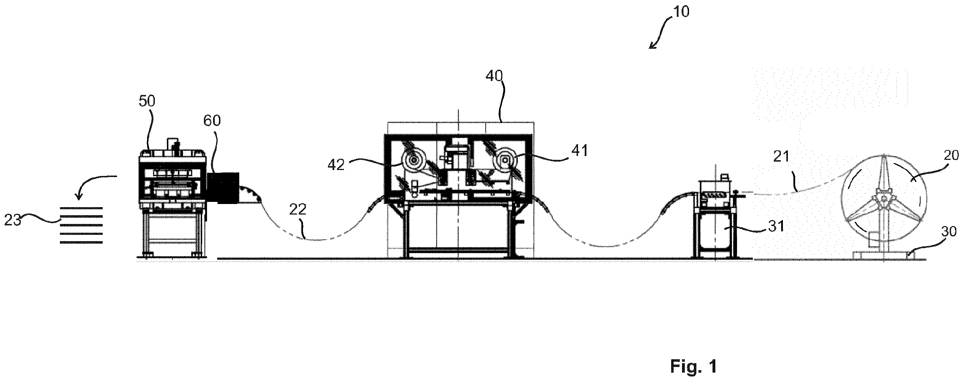

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildung in Fig. 1.

Fig. 1 zeigt eine schematische Darstellung einer Produktionsanlage 10 zur Herstellung von KFZ-Kennzeichenrohlingen 23 aus einem Metallband. Das Metallband 21 ist am Anfang der Produktionsstrecke als Coil 20 in eine Abwickelhaspel 30 eingelegt, so dass es kontinuierlich von dieser abgewickelt werden kann. Bei dem Metallband handelt es sich typischerweise um ein gewalztes Aluminiumband mit einer Breite, die beim durchzuführenden Prägevorgang zu einem KFZ-Kennzeichenrohling der gewünschten Breite führt. Die Dicke des Aluminiumbands liegt vorzugsweise in der Größenordnung von 0,7mm bis 1,5mm, während die Breite in der Größenordnung von 80mm bis 305mm liegt.

Zunächst wird das Metallband 21 üblicherweise von einem Antrieb in eine Richtmaschine 31 gezogen. Durch die Richtmaschine 31 wird das Metallband 21 so ausgerichtet, dass es dem Laminator 40 gerichtet zugeführt wird. Der Antrieb der Richtmaschine 31 kann bereits als kontaktloser Vorschub ausgeführt sein.

Vor der Richtmaschine 31 kann das Metallband 21 optional eine Erwärmungsvorrichtung wie einen Ofen durchlaufen (nicht dargestellt). Hierdurch wird das Metallband 21 vor dem Laminator 40 auf eine Temperatur erwärmt, die für die Aufbringung einer Folie auf das Metallband mittels Klebung erforderlich ist. Bei der Verwendung von Klebern, die bei Temperaturen um die 20°C, d.h. bei Umgebungstemperatur, verarbeitet werden können, ist dieser Ofen entbehrlich. Darüber hinaus könnten auch ein kontaktloser Antrieb mit integrierter Erwärmung an der Richtmaschine 31 und/oder ein kontaktloser Antrieb mit integrierter Erwärmung am Eingang des Laminators 40 diese Erwärmung durchführen, falls sie erforderlich ist.

Zwischen der Abwickelhaspel 30 und der Richtmaschine 31 bzw. der Richtmaschine 31 und dem Laminator 40 hängt das Metallband 21 vorzugsweise leicht durch, so dass dort jeweils ein Pufferabschnitt gebildet wird, mit dem unregelmäßige Abwickel- und Laminiervorgänge ausgeglichen werden können, ohne dass das Metallband 21 Zugspannungen ausgesetzt ist.

Der Laminator 40 ist beispielsweise so ausgebildet, dass er einen Vorrat an Folie auf einer Abwickelrolle 41 umfasst. Bei der Folie handelt es sich beispielsweise um eine weiße, retroreflektierende Folie, in welche optional Dekore, Kennzeichnungen, Sicherheitsmerkmale, etc. eingebracht sein können. Die Folie weist eine Schutzschicht auf, welche eine Klebeschicht der aufzubringenden Folienschicht abdeckt. Diese Schutzschicht wird auch als Liner oder Release Liner bezeichnet und innerhalb des Laminators 40 kontinuierlich abgezogen, woraufhin die Folie auf das durchlaufende Metallband 21 auflaminiert wird. Die entfernte Schutzfolie wickelt sich dabei auf eine Aufwickelrolle 42 auf und den Laminator 40 verlässt ein mit Folie versehenes Metallband 22.

Hinter dem Laminator 40 hängt das Metallband 22 vorzugsweise erneut leicht durch, um auch hier einen Pufferabschnitt zu bilden. Grundsätzlich ist die Laminiergeschwindigkeit des Laminators 40 jedoch an den Takt der nun folgenden Pressvorrichtung 50 angepasst bzw. umgekehrt. Die Pressvorrichtung 50 umfasst Mittel zum Prägen des mit der Folie versehenen Metallbands 22 und Mittel zur Abtrennung einzelner Abschnitte des Metallbands, um so geprägte Kennzeichenrohlinge 23 zu erzeugen. Der Pressvorrichtung 50 wird somit kontinuierlich ein durchgehendes Metallband 22 zugeführt, von dem die Pressvorrichtung sukzessive Abschnitte abtrennt und als geprägte Kennzeichenrohlinge 23 beispielsweise auf einen Stapel ablegt. Die Druckumformung in der Prägepresse 50 umfasst beispielsweise einen erhabenen, umlaufenden Prägerand oder andere erhabene Strukturen, die auf allen resultierenden Kennzeichen vorhanden sein sollen, so dass sie bereits in die Kennzeichenrohlinge 23 eingebracht werden können.

Für die Zuführung des Metallbands 22 zu der Pressvorrichtung 50 ist wenigstens an dieser Position innerhalb der Produktionsanlage 10 ein kontaktloser Vorschub 60 vorgesehen. Dieser Vorschub 60 zieht das Metallband 22 somit an und schiebt es getaktet in die Pressvorrichtung 50 ein. Gleichzeitig kann der Vorschub 60 das mit der Folie versehene Metallband 22 induktiv erwärmen, um so eine Mindesttemperatur im Metallband einzustellen. Diese liegt beispielsweise bei etwa 25 bis 30°C.

### Bezugszeichenliste:

- 10: Produktionsanlage
- 20: Coil
- 21: Metallband, Aluminiumband, unbearbeitet
- 22: Metallband, Aluminiumband, mit auflaminierter Folie
- 23: Kennzeichenrohling, Platine
- 30: Abwickelhaspel
- 31: Richtmaschine
- 40: Laminator
- 41: Abwickelrolle Folie
- 42: Aufwickelrolle Schutzschicht
- 50: Pressvorrichtung, Prägepresse
- 60: Kontaktloser Antrieb, Vorschub

## Patentansprüche

1. Produktionsanlage (10) zur Herstellung mehrerer KFZ-Kennzeichenrohlinge (23) aus einem kontinuierlich durch die Produktionsanlage (10) geführten Metallband (21;22), umfassend wenigstens einen Laminator (40), wenigstens eine Pressvorrichtung (50) und wenigstens einen Antrieb (60), wobei der Laminator (40) zur Aufbringung einer Folie auf das Metallband (21) ausgebildet, während die Pressvorrichtung (50) zur Druckumformung des mit der Folie versehenen Metallbands (22) und zur Teilung des mit der Folie versehenen Metallbands (22) in einzelne KFZ-Kennzeichenrohlinge (23) ausgebildet ist, und der wenigstens eine Antrieb (60) dazu ausgebildet ist, das Metallband (21;22) wenigstens abschnittsweise durch die Produktionsanlage (10) zu bewegen,
**dadurch gekennzeichnet, dass** der wenigstens eine Antrieb (60) ein kontaktloser Vorschub ist, der direkt vor der Pressvorrichtung (50) angeordnet ist, wobei der kontaktlose Vorschub (60) zur induktiven Erwärmung des Metallbands (21;22) während der Bewegung des Metallbands (21;22) ausgebildet ist.

2. Produktionsanlage nach Anspruch 1,
**dadurch gekennzeichnet, dass** der kontaktlose Vorschub (60) wenigstens zwei gegenüber liegende Statoren aufweist, durch welche Strom führbar ist, wodurch sich zwischen den Statoren eine magnetische Wanderwelle aufbaut, mit welcher das Metallband (21;22) kontaktlos zwischen den beiden Statoren in der Bewegungsrichtung der Wanderwelle bewegbar ist.

3. Produktionsanlage nach einem oder beiden der Ansprüche 1 und 2,
**dadurch gekennzeichnet, dass** das Metallband (21;22) ein Aluminiumband ist.

4. Verfahren zur Herstellung mehrerer KFZ-Kennzeichenrohlinge (23) innerhalb einer Produktionsanlage (10), wobei die KFZ-Kennzeichenrohlinge (23) aus einem kontinuierlich durch die Produktionsanlage (10) geführten Metallband (21;22) hergestellt werden, indem das Metallband (21;22) von wenigstens einem Antrieb (60) wenigstens einem Laminator (40) und wenigstens einer Pressvorrichtung (50) zugeführt wird, wobei der Laminator (40) eine Folie auf das Metallband (21) aufbringt und die Pressvorrichtung (50) das mit der Folie versehene Metallband (22) druckumformt und einzelne KFZ-Kennzeichenrohlinge (23) abtrennt,
**dadurch gekennzeichnet, dass** der wenigstens eine Antrieb (60) ein kontaktloser Vorschub (60) ist, welcher das Metallband (21;22) kontaktlos bewegt, wobei der kontaktlose Vorschub (60) der Pressvorrichtung (50) getaktet ein Metallband (22) zuführt, welches zuvor in dem Laminator (40) mit Folie versehen wurde, und der kontaktlose Vorschub (60) das Metallband (21;22) induktiv erwärmt.

## Claims

1. A production system (10) for producing several motor vehicle number plate blanks (23) from a metal strip (21; 22) fed continuously through the production system (10), comprising at least one laminator (40), at least one pressing device (50) and at least one drive device (60), wherein the laminator (40) is configured for applying a film onto the metal strip (21), while the pressing device (50) is configured for compressively shaping the metal strip (22) provided with the film and for dividing the metal strip (22) provided with the film into individual motor vehicle number plate blanks (23), and the at least one drive device (60) is configured for moving the metal strip (21; 22) through the production system (10) at least section by section,
**characterized in that** the at least one drive device (60) is a contactless feeding device disposed directly in front of the pressing device (50), wherein the contactless feeding device (60) is configured for inductively heating the metal strip (21; 22) during the movement of the metal strip (21; 22).

2. The production system according to claim 1,
**characterized in that** the contactless feeding device (60) has at least two oppositely positioned stators through which current can be conducted, whereby a magnetic traveling wave, with which the metal strip (21; 22) can be moved contactlessly between the two stators in the direction of movement of the traveling wave, builds up between the stators.

3. The production system according to any one or both of the claims 1 and 2,
**characterized in that** the metal strip (21; 22) is an aluminum strip.

4. A method for producing several motor vehicle number plate blanks (23) within a production system (10), wherein the motor vehicle number plate blanks (23) are produced from a metal strip (21; 22) fed continuously through the production system (10) by the metal strip (21; 22) being fed by at least one drive device (60) to at least one laminator (40) and at least one pressing device (50), wherein the laminator (40) applies a film onto the metal strip (21), and the pressing device (50) compressively shapes the metal strip (22) provided with the film and divides off individual motor vehicle number plate blanks (23),
**characterized in that** the at least one drive device (60) is a contactless feeding device (60) which contactlessly moves the metal strip (21; 22), wherein the contactless feeding device (60) feeds a metal strip (22), which has previously been provided with the film in the laminator (40), to the pressing device (50) in a timed manner, and the contactless feeding device (60) inductively heats the metal strip (21; 22).

## Revendications

1. Installation de production (10) destinée à produire une pluralité d'ébauches de plaque d'immatriculation (23) à partir d'une bande de métal (21; 22) guidée en continu à travers l'installation de production (10), comprenant au moins un laminateur (40), au moins un dispositif de pressage (50) et au moins un mécanisme d'entraînement (60), dans laquelle ledit laminateur (40) est conçu pour appliquer une feuille à la bande de métal (21), tandis que le dispositif de pressage (50) est conçu pour déformer par compression la bande de métal (22) pourvue de la feuille et pour diviser la bande de métal (22) pourvue de la feuille en ébauches de plaque d'immatriculation (23) individuelles, et ledit au moins un mécanisme d'entraînement (60) est conçu pour déplacer la bande de métal (21; 22) au moins par sections à travers ladite installation de production (10),
**caractérisée par le fait que** ledit au moins un mécanisme d'entraînement (60) est un dispositif d'avance sans contact (60) qui est disposé directement en amont du dispositif de pressage (50), dans laquelle le dispositif d'avance sans contact (60) est conçu pour le chauffage inductif de la bande de métal (21; 22) pendant le mouvement de la bande de métal (21; 22).

2. Installation de production selon la revendication 1,
**caractérisée par le fait que** le dispositif d'avance sans contact (60) comprend au moins deux stators opposés à travers lesquels on peut faire passer du courant ce par quoi une onde progressive magnétique se forme entre les stators au moyen de laquelle la bande de métal (21; 22) peut être déplacée sans contact entre les deux stators dans la direction de déplacement de l'onde progressive.

3. Installation de production selon l'une ou les deux des revendications 1 et 2,
**caractérisée par le fait que** la bande de métal (21; 22) est une bande d'aluminium.

4. Procédé de production d'une pluralité d'ébauches de plaque d'immatriculation (23) à l'intérieur d'une installation de production (10), dans lequel les ébauches de plaque d'immatriculation (23) sont produites à partir d'une bande de métal (21; 22) guidée en continu à travers l'installation de production (10), en amenant la bande de métal (21; 22) par le biais d'au moins un mécanisme d'entraînement (60) à au moins un laminateur (40) et à au moins un dispositif de pressage (50), dans lequel ledit laminateur (40) applique une feuille à la bande de métal (21), et le dispositif de pressage (50) déforme par compression la bande de métal (22) pourvue de la feuille et détache des ébauches de plaque d'immatriculation (23) individuelles,
**caractérisé par le fait que** ledit au moins un mécanisme d'entraînement (60) est un dispositif d'avance sans contact (60) qui déplace sans contact la bande de métal (21; 22), dans lequel le dispositif d'avance sans contact (60) amène de manière cadencée, au dispositif de pressage (50), une bande de métal (22) qui a été pourvue auparavant de feuille dans ledit laminateur (40), et le dispositif d'avance sans contact (60) chauffe de manière inductive la bande de métal (21; 22).
